# EUROPEAN PATENT APPLICATION

(11) **EP 3 239 117 A1**
(43) Date of publication of application: **01.11.2017**
(21) Application number: 15841012.6
(22) Date of filing: 17.11.2015
(51) Int. Cl.: C04B 41/86

(54) **ULTRA-SMOOTH GLAZE AND PREPARATION METHOD THEREOF**

(30) Priority: 09.12.2014 CN 201410743660
(71) Applicant: Da-Han International Holding Limited, Mongkok, Kowloon HK (CN)
(72) Inventor: HUANG, Zhaoyang, Mongkok Kowloon HK (CN)
(74) Representative: Office Kirkpatrick
(86) International application number: PCT/CN2015/094826
(87) International publication number: WO 2016/091048

(57) **Abstract**

The present invention relates to a super-smooth glaze and a preparation method thereof, and belongs to the field of ceramic machining, wherein each component in parts by weight is: potassium feldspar, quartz, kaolin, calcite, dolomite, boric acid, aluminum oxide, silicon oxide, calcium oxide, potassium oxide, sodium oxide, zinc oxide, and barium oxide; a mixture weighed in proportion is disposed in a planetary quick ball mill, and pure water of 30-40 wt% to the total weight of the mixture is added to ball-mill the mixture to particle sizes of 0.5∼1.0 µm, thus obtaining the super-smooth glaze. The method enables the surface of a glaze layer to be highly smooth and makes the roughness of the glaze be relatively reduced than that of an ordinary ceramic glaze.

## Description

### TECHNICAL FIELD

The present invention relates to a glaze and a preparation method thereof, and more particularly, to a super-smooth glaze and a preparation method thereof, and belongs to the field of ceramic machining.

### BACKGROUND

With the development of living condition of people, more and more ceramic products are applied to the daily life of people. With the enhanced health care consciousness of people, people pay increasing attention to working and family sanitation. Our country is the biggest manufacturing country for architectural and sanitary ceramics in the world, and is also the biggest architectural ceramics consumption market in the world, wherein the ceramic products glazed on the surfaces not only have excellent decorative effects, but also are clean, practical, and easy to clean due to the exquisite and smooth glaze on the surfaces thereof, thus being generally popular to people.

However, there is still a great gap between the quality of domestic products and that of overseas products, most high-grade products rely on import, and the overall economic benefits are lower. The major gap between the domestic products and the overseas products lies in that the glaze has unsatisfactory quality, and has such defects as tiny pinholes, sags and crests or the like. During the course of use, dirt and bacteria are easily deposited at the defect sections to provide nourishment to microorganisms to cause mass propagation of the microorganisms, which is harmful to the body health of people, and affects the beauty, and increases the cleaning difficulty. To reduce the jaggedness of the glaze is the fundamental method to solve the problem, and is also one hotspot of research of ceramic sanitary ware manufacturers and science researchers at present.

In the 1990s, those developed countries like European countries, U.S.A and Japan started to conduct researches on improving the smoothness of ceramic glaze, and applied a series of patents. China started relatively late in researching super-smooth glaze ceramics. Although ceramic manufacturers launched corresponding super-smooth ceramic products, the jaggedness of the glaze thereof is still larger than that of overseas products. According to the present invention, normal industrial materials are used to prepare super-smooth ceramics using a conventional firing method, which implements the effects of preventing liquid phase crystallization, improving the intensity and whiteness of green body and the glossiness of the glaze, reducing the jaggedness of the ceramic glaze, enabling the glaze to be dense, smooth and flat, effectively eliminating adhesion of dirt and production of black dots, having excellent anti-pollution performance, and making the ceramics keep as bright as new in a long time under the premise of not improving the production cost, thus reducing the cleaning times, easing the physical labor of people, and causing no pollution to environment at the same time.

Chinese invention "Self-cleaning Antibacterial Ceramic Glaze and Preparation Method and Ceramic Product thereof" (application No.: CN200910040630.0) discloses a ceramic glaze having self-cleaning antibacterial function, wherein the ceramic glaze prepared thereby achieves the effects of a super-smooth glaze by touching due to high glaze flatness and good degree of finish while implementing the self-cleaning antibacterial function, but it is not really a super-smooth glaze. Chinese invention "Formulation and Firing method for Super-smooth Glaze" (application No.: CN201310076559.8) discloses a super-smooth glaze, which has complicated firing process and high cost.

### SUMMARY

The object of the present invention is to provide a super-smooth glaze, which reduces the jaggedness of the ceramic glaze and keeps the ceramics as bright as new in a long time under the premise of not increasing the production cost.

In order to solve the foregoing problems, the invention employs the following technical solution.
A super-smooth glaze comprises each component in parts by weight:
18∼68 parts of potassium feldspar, 20∼98 parts of quartz, 10∼50 parts of kaolin, 20∼50 parts of calcite, 5∼40 parts of dolomite, 5∼40 parts of boric acid, 9∼17 parts of aluminum oxide, 5∼15 parts of silicon oxide, 1∼5 parts of calcium oxide, 5∼10 parts of potassium oxide, 5∼10 parts of sodium oxide, 5∼17 parts of zinc oxide, and 1∼5 parts of barium oxide.

18∼38 parts of potassium feldspar, 20∼68 parts of quartz, 10∼30 parts of kaolin, 20∼40 parts of calcite, 5∼30 parts of dolomite, 5∼30 parts of boric acid, 9∼12 parts of aluminum oxide, 5∼12 parts of silicon oxide, 1∼3 parts of calcium oxide, 5∼8 parts of potassium oxide, 5∼8 parts of sodium oxide, 5∼12 parts of zinc oxide, and 1∼3 parts of barium oxide.

28∼68 parts of potassium feldspar, 40∼98 parts of quartz, high 20∼50 parts of kaolin, 30∼50 parts of calcite, 15∼40 parts of dolomite, 15∼40 parts of boric acid, 10∼17 parts of aluminum oxide, 7∼15 parts of silicon oxide, 2∼5 parts of calcium oxide, 6∼10 parts of potassium oxide, 6∼10 parts of sodium oxide, 7∼17 parts of zinc oxide, and 2∼5 parts of barium oxide.

20∼60 parts of potassium feldspar, 25∼90 parts of quartz, 15∼45 parts of kaolin, 25∼45 parts of calcite, 10∼35 parts of dolomite, 10∼35 parts of boric acid, 10∼15 parts of aluminum oxide, 8∼12 parts of silicon oxide, 2∼4 parts of calcium oxide, 7∼9 parts of potassium oxide, 7∼9 parts of sodium oxide, 8∼15 parts of zinc oxide, and 2∼4 parts of barium oxide.

30∼60 parts of potassium feldspar, 30∼80 parts of quartz, 25∼35 parts of kaolin, 35∼50 parts of calcite, 20∼35 parts of dolomite, 20∼35 parts of boric acid, 12∼15 parts of aluminum oxide, 7∼10 parts of silicon oxide, 3∼4 parts of calcium oxide, 6∼9 parts of potassium oxide, 6∼9 parts of sodium oxide, 9∼12 parts of zinc oxide, and 3∼4 parts of barium oxide.

38 parts of potassium feldspar, 75 parts of quartz, 45 parts of kaolin, 35 parts of calcite, 15 parts of dolomite, 30 parts of boric acid, 12 parts of aluminum oxide, 8 parts of silicon oxide, 2 parts of calcium oxide, 7 parts of potassium oxide, 8 parts of sodium oxide, 10 parts of zinc oxide, and 2 parts of barium oxide.

55 parts of potassium feldspar, 35 parts of quartz, 30 parts of kaolin, 45 parts of calcite, 35 parts of dolomite, 15 parts of boric acid, 16 parts of aluminum oxide, 12 parts of silicon oxide, 4 parts of calcium oxide, 8 parts of potassium oxide, 6 parts of sodium oxide, 15 parts of zinc oxide, and 4 parts of barium oxide.

Another object of the present invention is to provide a preparation method of super-smooth glaze, including the following steps of:
disposing a mixture weighed in proportion in a planetary quick ball mill, and adding water of 30-40 wt% to the total weight of the mixture to ball-mill the mixture to particle sizes of 0.5∼1.0 µm, thus obtaining the super-smooth glaze.

The present invention has the advantageous effects that:
the super-smooth glaze ceramics prepared using a conventional glazing method under the premise of not increasing the production cost is as bright as a mirror, is smooth and exquisite, has no pinholes, is very difficult for dirt to adhere, and has very strong anti-pollution capacity.

### DETAILED DESCRIPTION

The invention will be further described in details hereinafter by examples, and these examples are merely for explanation of the invention, and are not intended to limit the scope of the invention.

### Embodiment 1

A super-smooth glaze includes each component in parts by weight:
55 parts of potassium feldspar, 35 parts of quartz, 30 parts of kaolin, 45 parts of calcite, 35 parts of dolomite, 15 parts of boric acid, 16 parts of aluminum oxide, 12 parts of silicon oxide, 4 parts of calcium oxide, 8 parts of potassium oxide, 6 parts of sodium oxide, 15 parts of zinc oxide, and 4 parts of barium oxide.

A preparation method of super-smooth glaze includes the following steps of:
disposing a mixture weighed in proportion in a planetary quick ball mill, and adding water of 30 wt% to the total weight of the mixture to ball-mill the mixture to particle sizes of 1.0 µm, thus obtaining the super-smooth glaze.

### Embodiment 2

A super-smooth glaze includes each component in parts by weight:
38 parts of potassium feldspar, 75 parts of quartz, 45 parts of kaolin, 35 parts of calcite, 15 parts of dolomite, 30 parts of boric acid, 12 parts of aluminum oxide, 8 parts of silicon oxide, 2 parts of calcium oxide, 7 parts of potassium oxide, 8 parts of sodium oxide, 10 parts of zinc oxide, and 2 parts of barium oxide.

A preparation method of super-smooth glaze includes the following steps of:
disposing a mixture weighed in proportion in a planetary quick ball mill, and adding water of 40 wt% to the total weight of the mixture to ball-mill the mixture to particle sizes of 0.5 µm, thus obtaining the super-smooth glaze.

### Embodiment 3

A super-smooth glaze includes each component in parts by weight:
18 parts of potassium feldspar, 98 parts of quartz, 10 parts of kaolin, 50 parts of calcite, 5 parts of dolomite, 40 parts of boric acid, 9 parts of aluminum oxide, 15 parts of silicon oxide, 1 part of calcium oxide, 10 parts of potassium oxide, 5 parts of sodium oxide, 17 parts of zinc oxide, and 1 part of barium oxide.

A preparation method of super-smooth glaze includes the following steps of:
disposing a mixture weighed in proportion in a planetary quick ball mill, and adding water of 35 wt% to the total weight of the mixture to ball-mill the mixture to particle sizes of 0.7 µm, thus obtaining the super-smooth glaze.

### Embodiment 4

A super-smooth glaze includes each component in parts by weight:
68 parts of potassium feldspar, 20 parts of quartz, 50 parts of kaolin, 20 parts of calcite, 40 parts of dolomite, 5 parts of boric acid, 17 parts of aluminum oxide, 5 parts of silicon oxide, 5 parts of calcium oxide, 5 parts of potassium oxide, 10 parts of sodium oxide, 5 parts of zinc oxide, and 5 parts of barium oxide.

A preparation method of super-smooth glaze includes the following steps of:
disposing a mixture weighed in proportion in a planetary quick ball mill, and adding water of 38 wt% to the total weight of the mixture to ball-mill the mixture to particle sizes of 0.6 µm, thus obtaining the super-smooth glaze.

### Embodiment 5

A super-smooth glaze includes each component in parts by weight:
45 parts of potassium feldspar, 68 parts of quartz, 30 parts of kaolin, 40 parts of calcite, 25 parts of dolomite, 30 parts of boric acid, 12 parts of aluminum oxide, 10 parts of silicon oxide, 3 parts of calcium oxide, 7 parts of potassium oxide, 8 parts of sodium oxide, 10 parts of zinc oxide, and 3 parts of barium oxide.

A preparation method of super-smooth glaze includes the following steps of:
disposing a mixture weighed in proportion in a planetary quick ball mill, and adding water of 32 wt% to the total weight of the mixture to ball-mill the mixture to particle sizes of 0.8 µm, thus obtaining the super-smooth glaze.

The smooth glaze provided by embodiments 1-5 were coated on the surface of a green body of a ceramic tile, fired under 1200°C for 120min, and the glaze obtained was tested, wherein the test results are as shown in Table 1.

**Table 1**

| Embodiment | Surface roughness um | Microscopic smoothness um |
|---|---|---|
| 1 | 0.05 | 0.4 |
| 2 | 0.03 | 0.7 |
| 3 | 0.02 | 0.6 |
| 4 | 0.07 | 0.9 |
| 5 | 0.04 | 0.6 |

It may be seen from the test data in Table 1 that the surface roughness of the ceramics prepared by applying the super-smooth glaze of the present invention to a ceramic body is no more than 0.07 um, the microscopic smoothness thereof is no more than 1.0 um, and the glaze is smooth and exquisite with high glossiness.

## Claims

1. A super-smooth glaze, comprising the following components in parts by weight: 18∼68 parts of potassium feldspar, 20∼98 parts of quartz, 10∼50 parts of kaolin, 20∼50 parts of calcite, 5∼40 parts of dolomite, 5∼40 parts of boric acid, 9∼17 parts of aluminum oxide, 5∼15 parts of silicon oxide, 1∼5 parts of calcium oxide, 5∼10 parts of potassium oxide, 5∼10 parts of sodium oxide, 5∼17 parts of zinc oxide, and 1∼5 parts of barium oxide.

2. The super-smooth glaze according to claim 1, comprising the following components in parts by weight:
18∼38 parts of potassium feldspar, 20∼68 parts of quartz, 10∼30 parts of kaolin, 20∼40 parts of calcite, 5∼30 parts of dolomite, 5∼30 parts of boric acid, 9∼12 parts of aluminum oxide, 5∼12 parts of silicon oxide, 1∼3 parts of calcium oxide, 5∼8 parts of potassium oxide, 5∼8 parts of sodium oxide, 5∼12 parts of zinc oxide, and 1∼3 parts of barium oxide.

3. The super-smooth glaze according to claim 1, comprising the following components in parts by weight:
28∼68 parts of potassium feldspar, 40∼98 parts of quartz, high 20∼50 parts of kaolin, 30∼50 parts of calcite, 15∼40 parts of dolomite, 15∼40 parts of boric acid, 10∼17 parts of aluminum oxide, 7∼15 parts of silicon oxide, 2∼5 parts of calcium oxide, 6∼10 parts of potassium oxide, 6∼10 parts of sodium oxide, 7∼17 parts of zinc oxide, and 2∼5 parts of barium oxide.

4. The super-smooth glaze according to claim 1, comprising the following components in parts by weight:
20∼60 parts of potassium feldspar, 25∼90 parts of quartz, 15∼45 parts of kaolin, 25∼45 parts of calcite, 10∼35 parts of dolomite, 10∼35 parts of boric acid, 10∼15 parts of aluminum oxide, 8∼12 parts of silicon oxide, 2∼4 parts of calcium oxide, 7∼9 parts of potassium oxide, 7∼9 parts of sodium oxide, 8∼15 parts of zinc oxide, and 2∼4 parts of barium oxide.

5. The super-smooth glaze according to claim 4, comprising the following components in parts by weight:
30∼60 parts of potassium feldspar, 30∼80 parts of quartz, 25∼35 parts of kaolin, 35∼50 parts of calcite, 20∼35 parts of dolomite, 20∼35 parts of boric acid, 12∼15 parts of aluminum oxide, 7∼10 parts of silicon oxide, 3∼4 parts of calcium oxide, 6∼9 parts of potassium oxide, 6∼9 parts of sodium oxide, 9∼12 parts of zinc oxide, and 3∼4 parts of barium oxide.

6. The super-smooth glaze according to claim 4, comprising the following components in parts by weight:
38 parts of potassium feldspar, 75 parts of quartz, 45 parts of kaolin, 35 parts of calcite, 15 parts of dolomite, 30 parts of boric acid, 12 parts of aluminum oxide, 8 parts of silicon oxide, 2 parts of calcium oxide, 7 parts of potassium oxide, 8 parts of sodium oxide, 10 parts of zinc oxide, and 2 parts of barium oxide.

7. The super-smooth glaze according to claim 1, comprising the following components in parts by weight:
55 parts of potassium feldspar, 35 parts of quartz, 30 parts of kaolin, 45 parts of calcite, 35 parts of dolomite, 15 parts of boric acid, 16 parts of aluminum oxide, 12 parts of silicon oxide, 4 parts of calcium oxide, 8 parts of potassium oxide, 6 parts of sodium oxide, 15 parts of zinc oxide, and 4 parts of barium oxide.

8. A preparation method of super-smooth glaze, comprising the following steps of:
disposing a mixture weighed in proportion in a planetary quick ball mill, and adding water of 30∼40 wt% to the total weight of the mixture.
